# EUROPÄISCHE PATENTSCHRIFT

(11) **EP 2 127 957 B1**
(45) Veröffentlichungstag und Bekanntmachung des Hinweises auf die Patenterteilung: **07.09.2011**
(21) Anmeldenummer: 08009821.3
(22) Anmeldetag: 29.05.2008
(51) Int. Cl.: B60R 21/015, B60N 2/00, G01G 19/414, G01L 1/14

(54) **Sicherheitsgurtwarnsystem**
Seatbelt warning system
Système d'alerte pour ceinture de sécurité

(43) Veröffentlichungstag der Anmeldung: 02.12.2009
(73) Patentinhaber: Delphi Technologies, Inc., Troy, Michigan 48007 (US)
(72) Erfinder: Fischer, Thomas, 57482 Wenden (DE); Fischer, Christian, 42899 Remscheid (DE); Fruend, Marcel, 42855 Remscheid (DE); Niederhagen, Kai, 42107 Wuppertal (DE)
(74) Vertreter: Denton, Michael John

(56) Entgegenhaltungen:
- WO-A-98/22836
- WO-A-2007/098216
- DE-A1- 10 011 134

## Beschreibung

Die Erfindung betrifft ein Sicherheitsgurtwarnsystem für Fahrzeuge, mit einer Sensormatte zur Detektion einer auf deren Oberfläche wirkenden Kraft. Ein Sicherheitsgurtwarnsystem dieser Art ist in der gattungsbildenden WO 2007/098216 beschrieben.

Fahrzeuge werden zunehmend mit Sicherheitsgurtwarnsystemen ausgestattet, die bei einem jeweiligen durch das Gewicht einer Person belasteten Fahrzeugsitz ein Warnsignal erzeugen, falls der Sicherheitsgurt nicht angelegt wird. Ein herkömmliches Sicherheitsgurtwarnsystem umfasst beispielsweise einen auf Graphit-Komposit basierenden Sensor auf einer PET-(z.B. Polyethylenterephthalat)-Folie mit einer Kontaktfarbe, deren Widerstand sich in Abhängigkeit von dem einwirkenden Druck ändert. Da ein solcher Sensor unter dem Sitzbezug angeordnet ist, ergibt sich eine Reihe von Problemen. So hat der Sensor Einfluss auf den Sitzkomfort. Die Ausführung des Sitzbezugs kann sich auf die Leistungsfähigkeit des Sensors auswirken und unterliegt daher entsprechenden Einschränkungen.

Zudem unterliegt auch der Schaumstoff im Hinblick auf die Oberflächengestaltung gewissen Einschränkungen. Schließlich ist auch das von der Feuchtigkeit und/oder der Alterung abhängige Verhalten des Sensors kritisch.

In der DE 100 11 134 A ist eine Druckmess-Vorrichtung mit einem Mess-Kondensator und einem Referenz-Kondensator beschrieben, wobei zwischen den Elektroden des Mess-Kondensators ein erstes Dielektrikum und zwischen den Elektroden des Referenz-Kondensators ein zweites Dielektrikum angeordnet ist. Dabei besitzen das erste und das zweite Dielektrikum eine unterschiedliche Kompressibilität, sodass sich auch bei gleicher Druckbeaufschlagung der beiden Kondensatoren eine unterschiedliche Kapazitätsänderung ergibt.

Der Erfindung liegt die Aufgabe zugrunde, ein verbessertes Sicherheitsgurtwarnsystem der eingangs genannten Art zu schaffen, bei dem die oben genannten Probleme beseitigt sind. Dabei sollen bei einfachem Aufbau insbesondere eine einfache Auswertung der Sensorsignale ermöglicht und

eine zuverlässige, von Umgebungseinflüssen im Wesentlichen unabhängige Funktionsweise gewährleistet werden.

Diese Aufgabe wird erfindungsgemäß dadurch gelöst, dass dass die Sensormatte zur Bildung zweier elektrischer Kondensatoren zwei sandwichartig übereinander liegende, jeweils zwischen elektrisch leitenden Schichten angeordnete dielektrischen Lagen umfasst, die zumindest in Richtung der kraftbedingten Belastung eine unterschiedliche Kompressibilität besitzen, so dass sich die Kapazitäten der beiden Kondensatoren mit einer jeweiligen Belastung der Sensormatte unterschiedlich ändern,
wobei die Sensormatte eine zur Bildung zweier Zwischenräume zweifach gefaltete flexible Folie umfasst und die beiden dielektrischen Lagen in die beiden durch die flexible Folie gebildeten Zwischenräume eingesetzt sind.

Die Sensormatte eines solchen Sicherheitsgurtwarnsystems kann insbesondere unterhalb des Schaumstoffs eines jeweiligen Kraftfahrzeugsitzes angeordnet werden, sodass das Sicherheitsgurtwarnsystem keinen Einfluss auf den Sitzkomfort hat. Entsprechend ergeben sich auch keine Einschränkungen bezüglich der Oberflächengestaltung des Sitzes. Da die Kapazitäten zweier denselben Umweltbedingungen ausgesetzter Kondensatoren für die Auswertung der durch eine jeweilige Belastung hervorgerufenen Änderungen herangezogen werden können, ist das System gegenüber Umwelteinflüssen stabil. Zudem kann mit der Heranziehung der Kapazitäten der beiden Kondensatoren für die Auswertung die betreffende Auswerteeinrichtung relativ einfach gehalten werden.

Bevorzugt ist eine der beiden dielektrischen Lagen kompressibel und die andere dielektrische Lage zumindest im Wesentlichen inkompressibel. Hierbei ist insbesondere von Vorteil, wenn bei einer jeweiligen Belastung der Sensormatte eine der beiden dielektrischen Lagen deutlich komprimiert wird und sich die betreffende Kapazität somit deutlich ändert, während die andere dielektrische Lage zumindest im Wesentlichen nicht komprimiert wird, sodass deren Kapazität zumindest im Wesentlichen unverändert bleibt.

Gemäß einer bevorzugten praktischen Ausführungsform des erfindungsgemäßen Sicherheitsgurtwarnsystems sind die Kapazitäten der beiden Kondensatoren bei fehlender Belastung der Sensormatte zumindest im Wesentlichen gleich groß.

Vorteilhafterweise umfasst das Sicherheitsgurtwarnsystem eine Auswerteeinrichtung, um in Abhängigkeit von den Kapazitäten der beiden Kondensatoren gegebenenfalls ein Gurtwarnsignal zu erzeugen. Dabei ist die Auswerteeinrichtung bevorzugt so ausgeführt, dass das Gurtwarnsignal in Abhängigkeit von einer Änderung der Kapazitäten der beiden Kondensatoren relativ zueinander erzeugbar ist.

Eine bevorzugte praktische Ausführungsform des erfindungsgemäßen Sicherheitsgurtwarnsystems zeichnet sich dadurch aus, dass die Auswerteeinrichtung eine Brückenschaltung umfasst, wobei die beiden Kondensatoren unterschiedlichen Zweigen dieser Brückenschaltung zugeordnet sind. Von Vorteil ist hierbei insbesondere, wenn die Brückenschaltung bei fehlender Belastung der Sensormatte abgeglichen ist. Ein solcher Abgleich kann beispielsweise dadurch herbeigeführt werden, dass die Kapazitäten der beiden Kondensatoren bei fehlender Belastung der Sensormatte zumindest im Wesentlichen gleich groß sind.

Zweckmäßigerweise ist die die relativ höhere Kompressibilität aufweisende dielektrische Lage der Sensormatte oberhalb der die relativ geringere Kompressibilität aufweisenden dielektrischen Lage angeordnet.

Als flexible Folie kann insbesondere eine PET- oder PEN-Folie vorgesehen sein. Die den beiden Kondensatoren zugeordneten elektrisch leitenden Schichten sind vorteilhafterweise durch eine elektrisch leitende Beschichtung, insbesondere Kupferbeschichtung, der flexiblen Folie gebildet.

Von Vorteil ist insbesondere auch, wenn zumindest eine der beiden dielektrischen Lagen der Sensormatte luftdurchlässig ist. Bevorzugt ist jede der beiden dielektrischen Lagen jeweils luftdurchlässig. Die beiden dielektrischen Lagen sind somit den Umgebungsbedingungen in vergleichbarer Weise ausgesetzt.

Bevorzugt besteht die die relativ höhere Kompressibilität aufweisende dielektrische Lage der Sensormatte zumindest teilweise aus Silikonkautschuk.

Zumindest die die relativ geringere Kompressibilität aufweisende dielektrische Lage kann beispielsweise ein dreidimensionales Abstandsgewirke besitzen.

Gemäß einer bevorzugten praktischen Ausführungsform des erfindungsgemäßen Sicherheitsgurtwarnsystems besitzen die beiden dielektrischen Lagen der Sensormatte einen zumindest im Wesentlichen gleichen Temperaturausdehnungskoeffizienten und/ oder einen zumindest im Wesentlichen gleichen Feuchteausdehnungskoeffizienten.

Die jeweiligen Umgebungsbedingungen wirken sich damit zumindest im Wesentlichen gleich auf die beiden dielektrischen Lagen aus, sodass insbesondere bei einer Heranziehung der Änderungen der Kapazitäten der beiden Kondensatoren relativ zueinander bei der Auswertung jeweilige Umgebungseinflüsse zumindest im Wesentlichen kompensiert werden.

Mit dem erfindungsgemäßen Sicherheitsgurtwarnsystem kann also ein bisher unmittelbar unter der Sitzverkleidung angeordneter Sensor ("a-surface sensor") ersetzt werden durch eine unter dem Schaumstoff des jeweiligen Sitzes angeordnete kapazitive Sensormatte, deren Kapazitätswerte mittels einer abgeglichenen Brückenschaltung ausgewertet werden. Die Sensormatte als solche kann beispielsweise eine zweifach gefaltete flexible Folie oder Basismatte mit einer Silikonkautschuk-Einlage als flexible dielektrische obere Lage und einer ein dreidimensionales Abstandsgewirke aufweisenden nicht elastischen dielektrischen Lage als untere Lage umfassen. Mit einem solchen Aufbau werden zwei Kondensatorelemente gebildet, die bei leerem, das heißt nicht belastetem Sitz zumindest im Wesentlichen die gleiche Kapazität besitzen. Wird der betreffende Sitz dagegen belastet, so ändert der obere Kondensator seine Kapazität erheblich, und zwar aufgrund der entsprechend starken Kompression der Silikonkautschuk-Einlage. Dagegen bleibt die untere Lage zumindest im Wesentlichen unverändert, sodass entsprechend die Kapazität des unteren Kondensators zumindest im Wesentlichen unverändert bleibt. Zur Auswertung der Sensorsignale sowie zur Erzeugung des Gurtwarnsignal genügt beispielsweise eine einfache Brückenschaltung. Durch eine entsprechende Ausgestaltung können durch die Umgebungsbedingungen wie insbesondere die Feuchtigkeit bedingte Effekte kompensiert werden, da die beiden Kondensatoren sich durch Feuchte- und Alterungseinflüsse in der gleichen Weise ändern.

Das erfindungsgemäße Sicherheitsgurtwarnsystem bringt demzufolge insbesondere die folgenden Vorteile mit sich:
Der Sitzkomfort wird nicht beeinträchtigt, da das Sicherheitsgurtwarnsystem bzw. die Sensormatte unterhalb des Schaumstoffs des betreffenden Sitzes angeordnet werden kann. Zudem wirkt sich das System in keiner Weise auf die Oberflächengestaltung aus. Darüber hinaus wird eine optimale Stabilität gegenüber den Umgebungsbedingungen erreicht. Zur Auswertung genügen einfache elektronische Schaltungen, wodurch die Kosten entsprechend reduziert werden.

Eine jeweilige Sitzbelegung ist also auf äußerst kostengünstige und zuverlässige Art und Weise möglich. Eine solche Sitzbelegung kann beispielsweise dann festgestellt werden, wenn das betreffende Gewicht größer als 30 kg ist. Ein leerer Sitz kann beispielsweise dann festgestellt werden, wenn das betreffende Gewicht geringer als 6 kg ist.

Den sandwichartig aufgebauten doppelten Kondensator erhält man beispielsweise unter Verwendung einer PET- oder PEN-Folie mit Kupferbeschichtung. Die beiden dielektischen Zwischenlagen besitzen eine unterschiedliche Steifigkeit bzw. Elastizität oder Kompressibilität. Bei fehlender Belastung eines jeweiligen Sitzes können die beiden Kondensatoren zumindest im Wesentlichen die gleiche Kapazität besitzen. Dagegen wird im belasteten Zustand des Sitzes die eine dielektrische Lage komprimiert, während die andere dielektrische Lage insbesondere zumindest im Wesentlichen unverändert bleibt.

Ein solches Verhalten kann auf äußerst einfache Weise beispielsweise durch eine einfache Brückenschaltung erfasst werden. Bezüglich Feuchteund Temperatureinflüssen ergibt sich eine Selbstkompensation. Schließlich ist das erfindungsgemäße Sicherheitsgurtwarnsystem gegenüber mechanischen Belastungen äußerst robust und unempfindlich.

Weitere Merkmale und Vorteile der Erfindung ergeben sich aus der Zeichnung; in dieser zeigen:
- Fig. 1: eine schematische perspektivische Darstellung einer beispielhaften Ausführungsform der Sensormatte eines Sicherheitsgurtwarnsystems,
- Fig. 2: eine schematische Darstellung der beiden dielektri- schen Lagen der Sensormatte gemäß Fig. 1 bei fehlen- der Belastung;
- Fig. 3: eine schematische Darstellung der beiden dielektri- schen Lagen der Sensormatte gemäß Fig. 1 unter Be- lastung,
- Fig. 4: eine schematische Darstellung der Sensormatte gemäß Fig. 1 im auseinandergefalteten Zustand,
- Fig. 5: eine Gegenüberstellung beispielhafter Materialien für die beiden dielektrischen Lagen der Sensormatte,
- Fig. 6: eine schematische Darstellung einer beispielhaften Ausführungsform der elektronischen Auswerteeinrich- tung des Sicherheitsgurtwarnsystems, und
- Fig. 7: ein Diagramm, aus dem sich der Einfluss der Tempe- ratur auf die Kapazität im belasteten und im unbelas- teten Zustand der Sensormatte ergibt.

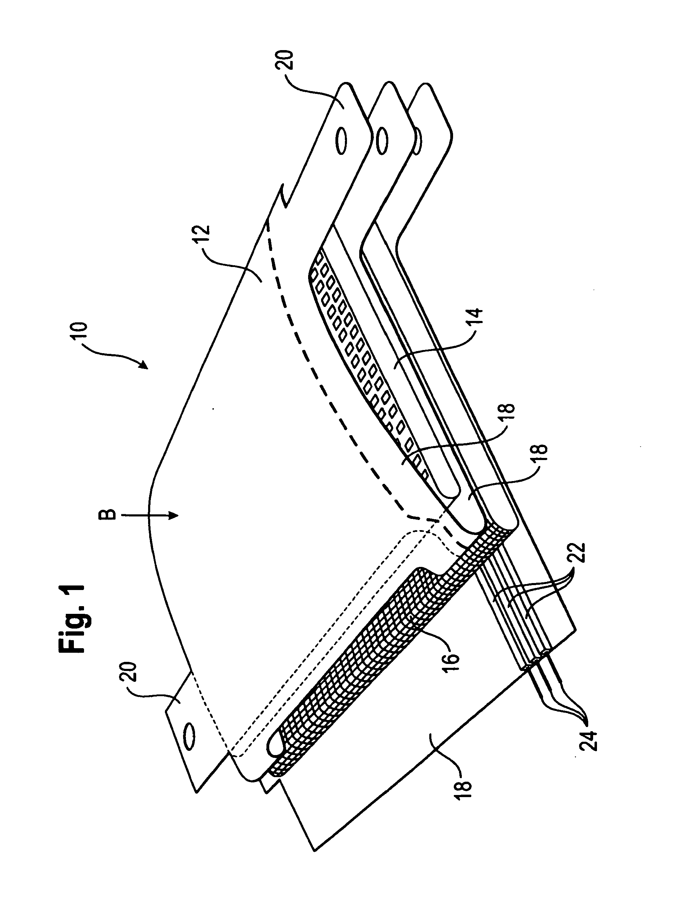

Fig. 1 zeigt in schematischer perspektivischer Darstellung eine beispielhafte Ausführungsform einer der Detektion einer auf deren Oberfläche wirkenden Kraft dienenden Sensormatte 10 eines insbesondere für Fahrzeuge bestimmten Sicherheitsgurtwarnsystems.

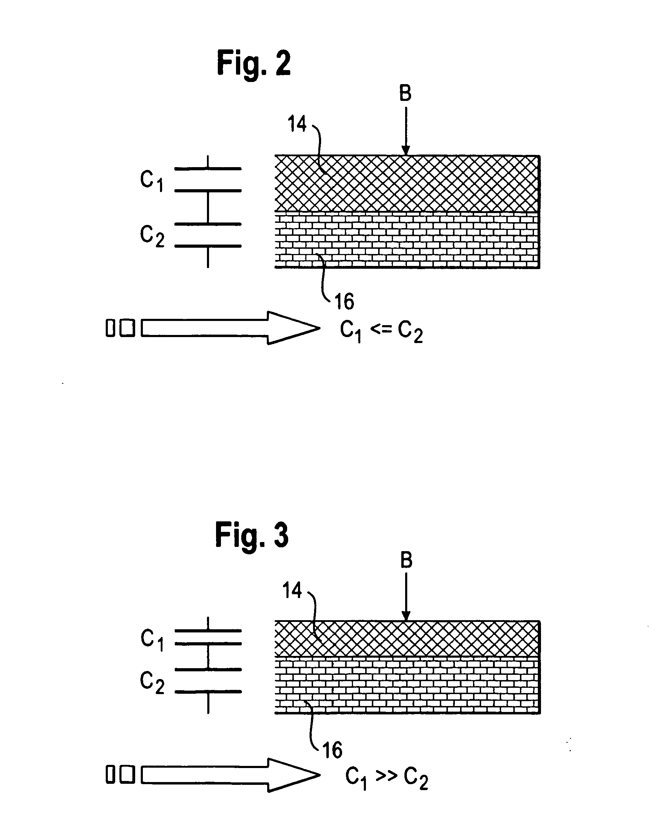

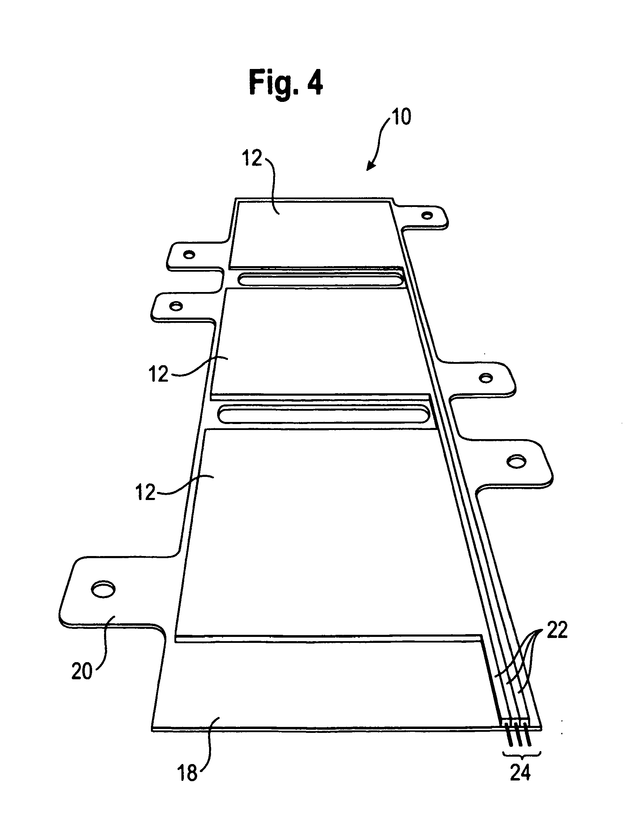

Wie anhand der Fig. 1 zu erkennen ist, umfasst die Sensormatte 10 zur Bildung zweier elektrischer Kondensatoren C₁, C₂ (vgl. beispielsweise auch die Fig. 2, 3 und 6) zwei sandwichartig übereinanderliegende, jeweils zwischen elektrisch leitenden Schichten 12 (vgl. auch Fig. 4) angeordnete dielektrische Lagen 14, 16. Dabei besitzen die beiden dielektrischen Lagen 14, 16 zumindest in Richtung der kraftbedingten Belastung eine unterschiedliche Kompressibilität, sodass sich die Kapazitäten der beiden Kondensatoren C₁, C₂ mit einer jeweiligen Belastung der Sensormatte 10 unterschiedlich ändern. Die Belastungsrichtung ist in den Fig. 1 bis 3 mit einem jeweiligen Pfeil "B" angedeutet.

Die kompressiblere dielektrische Lage 14 kann beispielsweise oberhalb der weniger kompressiblen oder inkompressiblen dielektrischen Lage 16 angeordnet sein. Die beiden dielektrischen Lagen 14, 16 können insbesondere so beschaffen sein, dass die dielektrische Lage 14 unter den in Frage kommenden Belastungen stark kompressibel und die andere dielektrische Lage unter den in Frage kommenden Belastungen im Wesentlichen inkompressibel ist.

Die Sensormatte 10 kann insbesondere so ausgelegt sein, dass die Kapazitäten der beiden Kondensatoren C₁, C₂ bei fehlender Belastung zumindest im Wesentlichen gleich groß sind.

Die Sensormatte 10 kann eine zur Bildung zweier Zwischenräume zweifach gefaltete flexible Folie 18 umfassen, wobei, wie anhand der Fig. 1 zu erkennen ist, die beiden dielektrischen Lagen 14, 16 in die beiden durch die flexible Folie 18 gebildeten Zwischenräume eingesetzt sind. Als flexible Folie 18 kann insbesondere eine PET- oder PEN-Folie vorgesehen sein.

Die den beiden Kondensatoren C₁,C₂ zugeordneten elektrisch leitenden Schichten 12 können beispielsweise durch eine elektrisch leitende Beschichtung, insbesondere Kupferbeschichtung, der flexiblen Folie 18 gebildet sein (vgl. insbesondere auch Fig. 4).

Zumindest eine der beiden dielektrischen Lagen 14, 16 der Sensormatte 10 kann luftdurchlässig sein, wobei bevorzugt jede der beiden dielektrischen Lagen 14, 16 jeweils luftdurchlässig ist.

Die die relativ höhere Kompressibilität aufweisende dielektrische Lage 14 der Sensormatte 10 kann zumindest teilweise aus Silikonkautschuk bestehen.

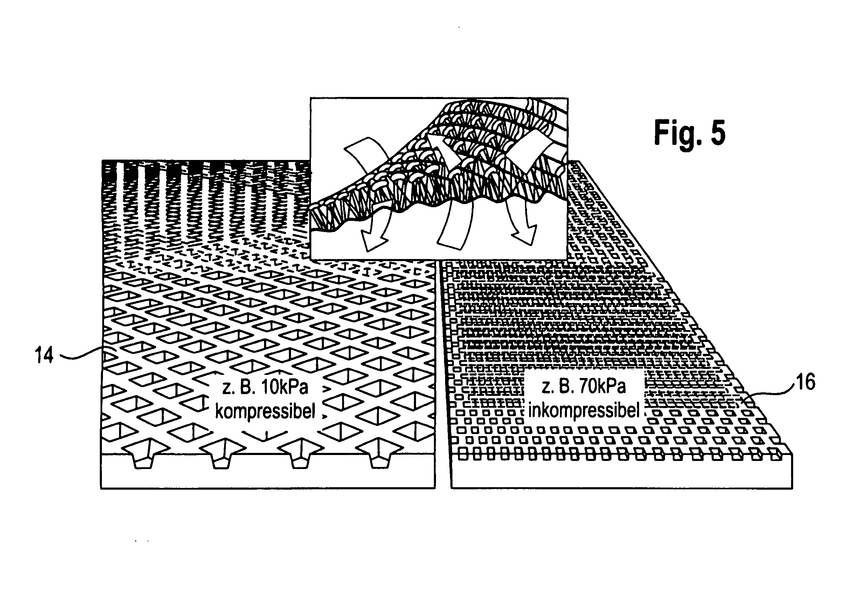

Zumindest die die relativ geringere Kompressibilität aufweisende bzw. inkompressible dielektrische Lage 16 kann insbesondere ein dreidimensionales Abstandsgewirke besitzen (vgl. insbesondere auch Fig. 5).

Zudem können die beiden dielektrischen Lagen 14, 16 der Sensormatte 10 einen zumindest im Wesentlichen gleichen Temperaturausdehnungskoeffizienten und/oder einen zumindest im Wesentlichen gleichen Feuchteausdehnungskoeffizienten besitzen.

Wie anhand der Fig. 1 zu erkennen ist, kann die flexible Folie 18 mit Laschen 20 versehen sein, über die die Sensormatte 10 insbesondere unterhalb des Schaumstoffs des betreffenden Sitzes befestigbar ist.

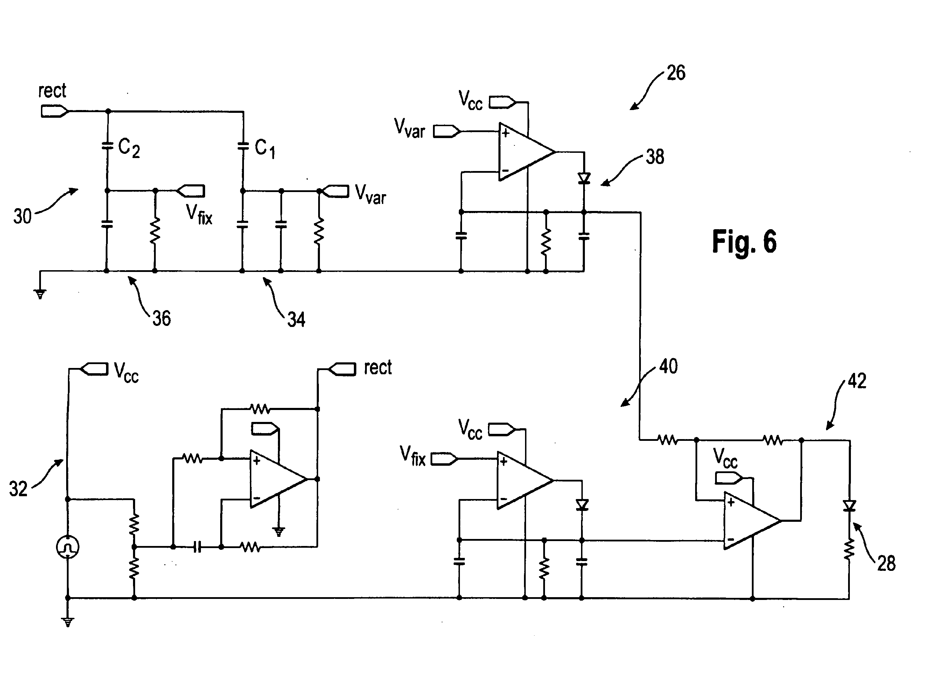

Die elektrisch leitenden Schichten 12 können über Leiterbahnen 22 mit Anschlüssen 24 verbunden sein, über die die beiden gebildeten Kondensatoren C₁, C₂ mit einer elektronischen Auswerteeinrichtung 26 (vgl. auch Fig. 6) verbunden werden können.

Fig. 2 zeigt in schematischer Darstellung die beiden dielektrischen Lagen 14, 16 der Sensormatte 10 gemäß Fig. 1 bei fehlender Belastung bzw. nicht belegtem Sitz. Wie anhand der Fig. 2 zu erkennen ist, kann in diesem Fall die kompressiblere dielektrische Lage 14 beispielsweise zumindest im Wesentlichen die gleiche Dicke aufweisen wie die die relative geringere Kompressibilität aufweisende bzw. inkompressible Lage 16.

In der Fig. 2 sind links neben den beiden dielektrischen Lagen 14 die diese Lagen 14, 16 sowie die betreffenden elektrisch leitenden Schichten 12 umfassen Kondensatoren C₁, C₂ dargestellt. Im vorliegenden, nicht belasteten Fall kann die Kapazität des die kompressiblere dielektrische Lage 14 umfassenden Kondensators C₁ beispielsweise kleiner oder gleich der Kapazität des die weniger kompressible bzw. inkompressible Lage 16 umfassenden Kondensators C₂ sein.

Demgegenüber zeigt Fig. 3 in schematischer Darstellung die beiden dielektrischen Lagen 14, 16 der Sensormatte 10 unter Belastung. Die die relativ höhere Kompressibilität aufweisende dielektrische Schicht 14 wird also in Belastungsrichtung B komprimiert. Diese Lage 14 kann demnach, wie dargestellt, unter Belastung eine geringere Dicke als die dielektrische Lage 16 aufweisen. Entsprechend wird die Kapazität des die Lage 14 umfassenden Kondensators C₁ größer.

Im vorliegenden Belastungsfall wird also die Kapazität des die kompressiblere Lage 14 umfassenden Kondensators C₁ wesentlich größer als die Kapazität des die weniger kompressible bzw. inkompressible Lage 16 umfassenden Kondensators C₂.

Fig. 4 zeigt in schematischer Darstellung die Sensormatte 10 gemäß Fig. 1 im auseinandergefalteten Zustand, wobei der Übersichtlichkeit halber die beiden dielektrischen Lagen weggelassen sind.

Wie anhand der Fig. 4 zu erkennen ist, können die elektrisch leitenden Schichten 12 durch eine jeweilige elektrisch leitende Beschichtung, insbesondere Kupferbeschichtung der flexiblen Folie 18 gebildet sein. Es sind auch wieder die Leiterbahnen 22 zu erkennen, über die die drei elektrisch leitenden Schichten 12 mit den drei Anschlüssen 24 verbunden sind.

Fig. 5 zeigt eine Gegenüberstellung beispielhafter Materialien für die beiden dielektrischen Lagen 14, 16 der Sensormatte 10. Dabei ist das Material für die eine höhere Kompressibilität aufweisende dielektrische Lage 14 auf der linken Seite und das Material für die eine relativ geringere Kompressibilität aufweisende bzw. imkompressible Lage 16 auf der rechten Seite der Fig. 5 dargestellt. Wie bereits erwähnt, kann die die relativ höhere Kompressibilität aufweisende dielektrische Lage 14 aus Silikonkautschuk bestehen. Zumindest die die relativ geringere Kompressibilität aufweisende bzw. inkompressible dielektrische Lage 16 kann insbesondere ein dreidimensionales Abstandsgewirke besitzen. Wie anhand des oberen mittleren Abschnitts der Fig. 5 zu erkennen ist, können insbesondere beide Lagen 14, 16 jeweils luftdurchlässig sein.

Fig. 6 zeigt in schematischer Darstellung eine beispielhafte Ausführungsform einer elektronischen Auswerteeinrichtung 26 des Sicherheitsgurtsystems. Dabei kann diese Auswerteeinrichtung 26 insbesondere so ausgelegt sein, dass in Abhängigkeit von den Kapazitäten der beiden Kondensatoren C₁, C₂ gegebenenfalls ein Gurtwarnsignal 28 erzeugt wird, was hier beispielsweise über eine LED-Ausgabe erfolgt. Dabei ist die Auswerteeinrichtung 26 bevorzugt so ausgeführt, dass das Gurtwarnsignal 28 in Abhängigkeit von einer Änderung der Kapazitäten der beiden Kondensatoren C₁, C₂ relativ zueinander erzeugbar ist.

Wie anhand der Fig. 6 zu erkennen ist, umfasst die Auswerteeinrichtung 26 eine Brückenschaltung 30, bei der es sich insbesondere um eine sogenannte Doppel-Brückenschaltung handeln kann. Dabei sind die beiden Kondensatoren C₁, C₂ unterschiedlichen Zweigen dieser Brückenschaltung 30 zugeordnet.

Die Auswerteeinrichtung 26 umfasst zudem einen Signalgenerator 32, bei dem es sich im vorliegenden Fall beispielsweise um einen Rechteckgenerator handelt.

Der Signalgenerator 32 liefert ein Ausgangssignal "rect", mit dem die Brückenschaltung 30 beaufschlagt wird.

Die Brückenschaltung 30 umfasst einen ein variables Ausgangssignal Vᵥₐᵣ liefernden variablen Brückenteil 34 sowie einen ein festes Ausgangssignal V_{fix} liefernden fixen Brückenteil 36.

Das Ausgangssignal Vᵥₐᵣ des variablen Brückenteils 34 wird z.B. einem ersten Spitzenwertgleichrichter 38 und das Ausgangssignal V_{fix} des fixen Brückenteils 36 z.B. einem zweiten Spitzenwertgleichrichter 40 zugeführt.

Die Ausgangssignale der beiden Gleichrichter 38, 40, hier beispielsweise Spitzenwertgleichrichter, werden einem Komparator 42 zugeführt, bei dem es sich beispielsweise um einen Komparator mit Hysterese handeln kann. Dieser Komparator 42 liefert dann gegebenenfalls das Gurtwarnsignal 28.

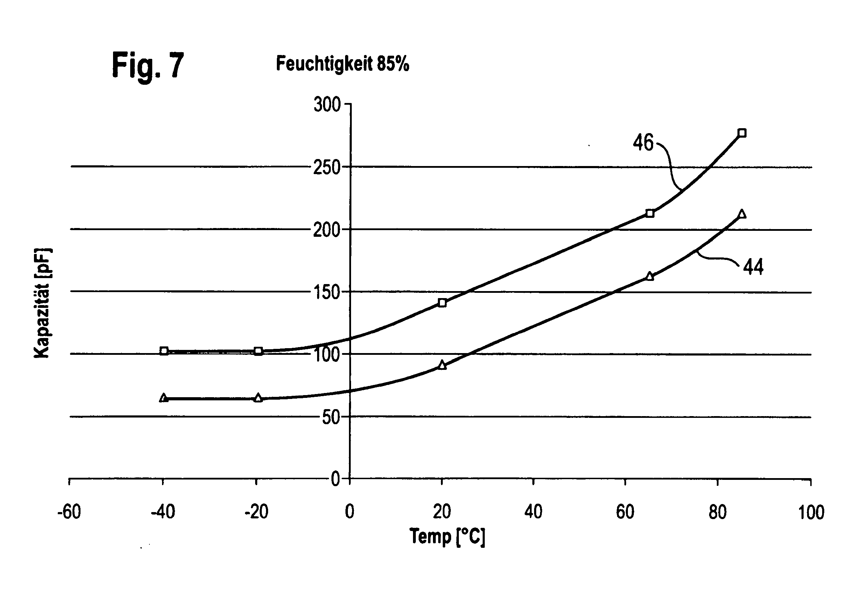

Fig. 7 zeigt ein Diagramm, aus dem sich der Einfluss der Temperatur auf die Kapazität im belasteten und im unbelasteten Zustand der Sensormatte 10 ergibt. Dabei sind auf der Abszisse die Temperatur in °C und auf der Ordinate die Kapazität in pF aufgetragen.

Dabei zeigt die Kurve 44 den Kapazitätsverlauf im unbelasteten Zustand. Es handelt sich hier also um eine Referenzkurve. Demgegenüber ist mit der Kurve 46 der Kapazitätsverlauf im belasteten Zustand angegeben.

Die Messungen wurden bei einer Feuchtigkeit von 85 % durchgeführt.

### Bezugszeichenliste

- 10: Sensormatte
- 12: elektrisch leitende Schicht
- 14: dielektrische Lage
- 16: dielektrische Lage
- 18: flexible Folie
- 20: Lasche
- 22: Leiterbahn
- 24: Anschluss
- 26: Auswerteeinrichtung
- 28: Gurtwarnsignal
- 30: Brückenschaltung
- 32: Signalgenerator
- 34: variabler Brückenteil
- 36: fixer Brückenteil
- 38: erster Spitzenwertgleichrichter
- 40: zweiter Spitzenwertgleichrichter
- 42: Komparator
- 44: Kurve
- 46: Kurve

- B: Belastungsrichtung
- C₁: Kondensator
- C₂: Kondensator

## Patentansprüche

1. Sicherheitsgurtwarnsystem für Fahrzeuge, mit einer Sensormatte (10) zur Detektion einer auf deren Oberflache wirkenden Kraft,
**dadurch gekennzeichnet,**
**dass** die Sensormatte (10) zur Bildung zweier elektrischer Kondensatoren (C₁, C₂) zwei sandwichartig übereinander liegende, jeweils zwischen elektrisch leitenden Schichten (12) angeordnete dielektrischen Lagen (14, 16) umfasst, die zumindest in Richtung der kraftbedingten Belastung eine unterschiedliche Kompressibilität besitzen, so dass sich die Kapazitäten der beiden Kondensatoren (C₁, C₂) mit einer jeweiligen Belastung der Sensormatte (10) unterschiedlich ändern, wobei die Sensormatte (10) eine zur Bildung zweier Zwischenräume zweifach gefaltete flexible Folie (18) umfasst und die beiden dielektrischen Lagen (14, 16) in die beiden durch die flexible Folie (18) gebildeten Zwischenräume eingesetzt sind.

2. System nach Anspruch 1,
**dadurch gekennzeichnet,**
**dass** eine (14) der beiden dielektrischen Lagen (14, 16) kompressibel und die andere dielektrische Lage (16) zumindest im Wesentlichen inkompressibel ist.

3. System nach Anspruch 1 oder 2,
**dadurch gekennzeichnet,**
**dass** die Kapazitäten der beiden Kondensatoren (C₁, C₂) bei fehlender Belastung der Sensormatte (10) zumindest im Wesentlichen gleich groß sind.

4. System nach einem der vorhergehenden Ansprüche,
**dadurch gekennzeichnet,**
**dass** eine Auswerteeinrichtung (26) vorgesehen ist, um in Abhängigkeit von den Kapazitäten der beiden Kondensatoren (C₁, C₂) gegebenenfalls ein Gurtwarnsignal (28) zu erzeugen.

5. System nach Anspruch 4,
**dadurch gekennzeichnet,**
**dass** die Auswerteeinrichtung (26) so ausgeführt ist, dass das Gurtwarnsignal (28) in Abhängigkeit von einer Änderung der Kapazitäten der beiden Kondensatoren (C₁, C₂) relativ zueinander erzeugbar ist.

6. System nach Anspruch 4 oder 5,
**dadurch gekennzeichnet,**
**dass** die Auswerteeinrichtung (26) eine Brückenschaltung (30) umfasst und dass die beiden Kondensatoren (C₁, C₂) unterschiedlichen Zweigen dieser Brückenschaltung zugeordnet sind.

7. System nach Anspruch 6,
**dadurch gekennzeichnet,**
**dass** die Brückenschaltung (30) bei fehlender Belastung der Sensormatte (10) abgeglichen ist.

8. System nach einem der vorhergehenden Ansprüche,
**dadurch gekennzeichnet,**
**dass** die die relativ höhere Kompressibilität aufweisende dielektrische Lage (14) der Sensormatte (10) oberhalb oder unterhalb der die relativ geringere Kompressibilität aufweisenden dielektrischen Lage (16) angeordnet ist.

9. System nach einem der vorhergehenden Ansprüche,
**dadurch gekennzeichnet,**
**dass** als flexible Folie (18) eine PET- oder PEN-Folie vorgesehen ist.

10. System nach einem der vorhergehenden Ansprüche,
**dadurch gekennzeichnet,**
**dass** die den beiden Kondensatoren (C_{1,} C₂) zugeordneten elektrisch leitenden Schichten (12) durch eine elektrisch leitende Beschichtung, insbesondere Kupferbeschichtung, der flexiblen Folie (18) gebildet sind.

11. System nach einem der vorhergehenden Ansprüche,
**dadurch gekennzeichnet,**
**dass** zumindest eine und vorzugsweise jede der beiden dielektrischen Lagen (14, 16) der Sensormatte (10) jeweils luftdurchlässig ist.

12. System nach einem der vorhergehenden Ansprüche,
**dadurch gekennzeichnet,**
**dass** die die relativ höhere Kompressibilität aufweisende dielektrische Lage (14) der Sensormatte (10) zumindest teilweise aus Silikonkautschuk besteht.

13. System nach einem der vorhergehenden Ansprüche,
**dadurch gekennzeichnet,**
**dass** zumindest die die relativ geringere Kompressibilität aufweisende dielektrische Lage (16) eine dreidimensionale Gitterstruktur besitzt.

14. System nach einem der vorhergehenden Ansprüche,
**dadurch gekennzeichnet,**
**dass** die beiden dielektrischen Lagen (14, 16) der Sensormatte (10) einen zumindest im Wesentlichen gleichen Temperaturausdehnungskoeffizienten und/oder einen zumindest im Wesentlichen gleichen Feuchteausdehnungskoeffizienten besitzen.

## Claims

1. Seat belt warning system for vehicles, with a sensor mat (10) for detecting a force acting on its surface,
**characterized in that**
the sensor mat (10) includes, for forming two electric capacitors (C₁, C₂), two dielectric layers (14, 16) respectively arranged between electrically conductive layers (12) lying one above the other in a sandwich manner, having different compressibilities in at least the force-conditioned load direction, so that the capacitances of the two capacitors (C₁, C₂) change differently with a respective load of the sensor mat (10), wherein the sensor mat (10) includes a double-folded flexible foil (18) for forming of two spacings and the two dielectric layers (14, 16) are arranged in the two spacings formed by the flexible foil (18).

2. The system according to claim 1,
**characterized in that**
one (14) of the two dielectric layers (14, 16) is compressible and the other dielectric layer (16) is at least substantially incompressible.

3. The system according to claim 1 or 2,
**characterized in that**
the capacitances of the two capacitors (C₁, C₂) are at least substantially equal in the absence of load on the sensor mat (10).

4. The system according to any of the preceding claims,
**characterized in that**
an evaluation device (26) is provided to generate a seat belt warning signal (28) depending on the capacitances of the two capacitors (C₁, C₂), if applicable.

5. The system according to claim 4,
**characterized in that**
the evaluation device (26) is adapted such that the seat belt warning signal (28) can be generated in response to a change of the capacitances of the two capacitors (C₁, C₂) relative to each other.

6. The system according to claim 4 or 5,
**characterized in that**
the evaluation device (26) includes a bridge circuit (30) and the two capacitors (C₁, C₂) are assigned to different branches of said bridge circuit.

7. The system according to claim 6,
**characterized in that**
the bridge circuit (30) is balanced in the absence of load on the sensor mat (10).

8. The system according to any of the preceding claims,
**characterized in that**
the dielectric layer (14) of the sensor mat (10) having the relatively higher compressibility is arranged above or below the dielectric layer (16) having the relatively lower compressibility.

9. The system according to any of the preceding claims,
**characterized in that**
a PET or PEN foil is provided as the flexible foil (18).

10. The system according to any of the preceding claims,
**characterized in that**
the electrically conductive layers (12) associated with the two capacitors (C₁, C₂) are formed by an electrically conductive coating, in particular copper coating, of the flexible foil (18).

11. The system according to any of the preceding claims,
**characterized in that**
at least one and preferably each of the two dielectric layers (14, 16) of the sensor mat (10) is permeable to air, respectively.

12. The system according to any of the preceding claims,
**characterized in that**
the dielectric layer (14) of the sensor mat (10) having the relatively higher compressibility is made at least partially of silicone rubber.

13. The system according to any of the preceding claims,
**characterized in that**
at least the dielectric layer (16) having the relatively lower compressibility has a three-dimensional lattice structure.

14. The system according to any of the preceding claims,
**characterized in that**
the two dielectric layers (14, 16) of the sensor mat (10) having an at least substantially equal thermal expansion coefficient and/or an at least substantially equal moisture expansion coefficient.

## Revendications

1. Système d'avertissement de ceinture de sécurité pour véhicules automobiles, comprenant un tapis-capteur (10) pour la détection d'une force agissant sur sa surface,
**caractérisé en ce que**
le tapis capteur (10) comprend, pour réaliser deux condensateurs électriques (C₁, C₂), deux nappes diélectriques (14, 16) disposées l'une au-dessus de l'autre à la manière d'un sandwich et agencées respectivement entre des couches électriquement conductrices (12) qui possèdent, au moins en direction de la charge due aux forces, une compressibilité différente, de sorte que les capacités des deux condensateurs (C₁, C₂) varient de façon différente avec une charge respective du tapis-capteur (10), ledit tapis-capteur (10) comprenant un film flexible (18) replié deux fois pour former deux intervalles, et les deux nappes diélectriques (14, 16) sont mises en place dans les deux intervalles formés par le film flexible (18).

2. Système selon la revendication 1,
**caractérisé en ce que** l'une (14) des deux nappes diélectriques (14, 16) est compressible et l'autre nappe diélectrique (16) est au moins sensiblement incompressible.

3. Système selon la revendication 1 ou 2,
**caractérisé en ce que** les capacités des deux condensateurs (C₁, C₂) sont au moins sensiblement égales en l'absence d'une charge sur le tapis capteur (10).

4. Système selon l'une des revendications précédentes,
**caractérisé en ce qu'**il est prévu une unité d'évaluation (26) afin d'engendrer, en fonction des capacités des deux condensateurs (C₁, C₂), le cas échéant un signal d'avertissement de ceinture (28).

5. Système selon la revendication 4,
**caractérisé en ce que** le circuit d'évaluation (26) est ainsi réalisé que le signal d'avertissement de ceinture (28) peut être engendré en fonction d'une modification des capacités des deux condensateurs (C₁, C₂) l'une par rapport à l'autre.

6. Système selon la revendication 4 ou 5,
**caractérisé en ce que** l'unité d'évaluation (26) comprend un circuit en pont (30), et **en ce que** les deux condensateurs (C₁, C₂) sont associés à des branches différentes de ce circuit en pont.

7. Système selon la revendication 6,
**caractérisé en ce que** le circuit en pont (30) est équilibré en l'absence de charges sur le tapis-capteur (10).

8. Système selon l'une des revendications précédentes,
**caractérisé en ce que** la nappe diélectrique (14), présentant la compressibilité relativement plus élevée, du tapis-capteur (10) est agencée au-dessus ou au-dessous de la nappe diélectrique (16) qui présente la compressibilité relativement plus faible.

9. Système selon l'une des revendications précédentes,
**caractérisé en ce qu'**il est prévu une feuille en PET ou en PEN à titre de film flexible (18).

10. Système selon l'une des revendications précédentes, **caractérisé en ce que** les couches électriquement conductrices (12) associées aux deux condensateurs (C₁, C₂) sont formées par un revêtement électriquement conducteur, en particulier un revêtement de caoutchouc, du film flexible (18).

11. Système selon l'une des revendications précédentes,
**caractérisé en ce qu'**une au moins et de préférence chacune des deux nappes diélectriques (14, 16) du tapis-capteur (10) est perméable à l'air.

12. Système selon l'une des revendications précédentes,
**caractérisé en ce que** la nappe diélectrique (14), présentant la compressibilité relativement plus élevée, du tapis-capteur (10) est au moins partiellement en caoutchouc au silicone.

13. Système selon l'une des revendications précédentes,
**caractérisé en ce qu'**au moins la nappe diélectrique (16) présentant la compressibilité relativement plus faible possède une structure en grillage tridimensionnelle.

14. Système selon l'une des revendications précédentes,
**caractérisé en ce que** les deux nappes diélectriques (14, 16) du tapis-capteur (10) possèdent un coefficient de dilatation thermique au moins sensiblement égal et/ou un coefficient d'allongement par humidité au moins sensiblement égal.
